# EUROPEAN PATENT APPLICATION

(11) **EP 2 728 514 A2**
(43) Date of publication of application: **07.05.2014**
(21) Application number: 13168454.0
(22) Date of filing: 20.05.2013
(51) Int. Cl.: G06K 15/00, G06K 15/02

(54) **Method of controlling speed of ethernet connection in power save mode and image forming apparatus performing the same**

(30) Priority: 06.11.2012 KR 20120125088
(71) Applicant: Samsung Electronics Co., Ltd, Gyeonggi-do 443-742 (KR)
(72) Inventor: Jo, Byeong-tak, Gyeonggi-do (KR); Park, Jung-jin, Gyeonggi-do (KR)
(74) Representative: Bray, Richard Anthony

(57) **Abstract**

A method of controlling a speed of an Ethernet connection in a power-save mode of an image forming apparatus includes turning off a print engine when the image forming apparatus enters the power save mode (S310), reducing the speed of the Ethernet connection between the image forming apparatus and an external device (S320), detecting an attempt to transmit printing data via the Ethernet connection from the external device (S330), determining a necessity of increasing the speed of the Ethernet connection based on the printing data (S340), and receiving and outputting the printing data (S360), wherein the receiving and outputting the printing data comprises, when it is not necessary to increase the speed of the Ethernet connection as a result of the determining, receiving and outputting the printing data after turning on the print engine, without changing the speed of the Ethernet connection.

## Description

### CROSS-REFERENCE TO RELATED APPLICATIONS

This application claims priority under 35 U.S.C. §119(a) from Korean Patent Application No. 10-2012-0125088, filed on November 6, 2012, in the Korean Intellectual Property Office, the disclosure of which is incorporated herein in its entirety by reference.

### BACKGROUND OF THE INVENTION

### 1. Field of the Invention

The present general inventive concept relates to a method of controlling speed of an Ethernet connection in a power-save mode of an image forming apparatus.

### 2. Description of the Related Art

Recently, as the importance of energy conservation is growing, methods of reducing standby power consumption of electronic products are being provided. An image forming apparatus switches to a power-save mode when it is not performing a printing operation. Thus, standby power consumption of the image forming apparatus may be reduced.

If the image forming apparatus switches to the power-save mode, a power supplied to a print engine or a scanner is shut off. Additionally, a network speed of the image forming apparatus, such as a speed of an Ethernet connection, is reduced. Therefore, the standby power consumption of the image forming apparatus may be reduced.

When the image forming apparatus is in a power-save mode, once it receives printing data from the outside and outputs the printing data, it does not take a lot of time to reestablish a power supply to the print engine. However, in such a case, it takes a relatively long time to increase the network speed. Therefore, if the image forming apparatus receives the printing data after waiting for an increase in an overall network speed, printing working time may be increased.

### SUMMARY OF THE INVENTION

According to the present invention there is provided an apparatus and method as set forth in the appended claims. Other features of the invention will be apparent from the dependent claims, and the description which follows. The present general inventive concept provides a method of controlling a speed of an Ethernet connection in a power-save mode, to reduce printing work time of an image forming apparatus, and an image forming apparatus to perform the same.

Additional features and utilities of the present general inventive concept will be set forth in part in the description which follows and, in part, will be obvious from the description, or may be learned by practice of the general inventive concept.

The foregoing and/or other features and utilities of the present general inventive concept are achieved by providing a method of controlling a speed of an Ethernet connection in a power-save mode of an image forming apparatus, the method including turning off a print engine by switching to the power-save mode of the image forming apparatus, reducing the speed of the Ethernet connection between the image forming apparatus and the external device, detecting an attempt to transmit printing data from the external device via the Ethernet connection, determining a necessity of increasing the speed of the Ethernet connection based on the detecting, in order to receive the printing data when the attempt to transmit the printing data is successful, and receiving and outputting the printing data, wherein the receiving and outputting the printing data comprises, when it is not necessary to increase the speed of the Ethernet connection as a result of the determining, receiving and outputting the printing data after turning on the print engine, without having to change the speed of the Ethernet connection.

The receiving and outputting of the printing data may include, when it is necessary to increase the speed of the Ethernet connection as a result of the determining, receiving and outputting the printing data after increasing the speed of the Ethernet connection and turning on the print engine.

The determining may include identifying an amount of the printing data, determining when the identified amount of the printing data exceeds a pre-defined data amount, and when the identified amount of the printing data is equal to or smaller than the pre-defined data amount, determining that it is not necessary to increase the speed of the Ethernet connection.

The determining may include identifying an output page count of the printing data, determining when the identified output page count of the printing data exceeds a pre-defined page count, and when the identified output page count of the printing data is equal to or smaller than pre-defined page count, determining that it is not necessary to increase the speed of the Ethernet connection.

The detecting may be performed by receiving printing work information from the external device via the Ethernet connection, and wherein the determining may be performed by determining the necessity of increasing the speed of the Ethernet connection based on the received printing work information.

The determining may include identifying an amount and an output page count of the printing data from the received printing work information, and when the identified amount of the printing data exceeds a pre-defined data amount and when the identified output page count of the printing data exceeds a pre-defined page count, determining that it is necessary to increase the speed of the Ethernet connection.

If the identified amount of the printing data is equal to or smaller than the pre-defined data amount and if the identified output page count of the printing data is equal to or smaller than the pre-defined page count, determining that it is not necessary to increase the speed of the Ethernet connection.

The determining may include identifying a type of the printing data from the received printing work information, and when the identified type of the printing data is not a type of printing data which needs to be output immediately after being received, determining that it is not necessary to increase the speed of the Ethernet connection.

The determining may be performed when the printing data is received.

The foregoing and/or other features and utilities of the present general inventive concept may also be achieved by providing a non-transitory computer-readable storage medium having stored thereon a computer program to execute a method of controlling a speed of an Ethernet connection in a power-save mode of an image forming apparatus, the method including a method of controlling a speed of an Ethernet connection in a power-save mode of an image forming apparatus, the method including turning off a print engine by switching to the power-save mode of the image forming apparatus, reducing the speed of the Ethernet connection between the image forming apparatus and the external device, detecting an attempt to transmit printing data from the external device via the Ethernet connection, determining a necessity of increasing the speed of the Ethernet connection based on the detecting, in order to receive the printing data when the attempt to transmit the printing data is successful, and receiving and outputting the printing data, wherein the receiving and outputting the printing data comprises, when it is not necessary to increase the speed of the Ethernet connection as a result of the determining, receiving and outputting the printing data after turning on the print engine, without having to change the speed of the Ethernet connection.

The foregoing and/or other features and utilities of the present general inventive concept may also be achieved by providing an image forming apparatus including a user interface unit to input a requirement condition of a power-save mode, a storage unit to store the input requirement condition of the power-save mode, an Ethernet interface unit to receive printing data from an external device via an Ethernet connection, a print engine to output the received printing data, and a control unit to, when the image forming apparatus switches to the power-save mode, turn off the print engine and reducing speed of the Ethernet connection, wherein, when the image forming apparatus switches to the power-save mode and detects an attempt to transmit printing data from the external device via the Ethernet interface unit, the control unit determines a necessity of increasing the speed of the Ethernet connection based on the printing data of the detected transmission attempt, wherein, when it is not necessary to increase the speed of the Ethernet connection as a result of the determination, the control unit controls the image forming apparatus to receive and output the printing data after turning on the print engine, without having to change the speed of the Ethernet connection.

When it is necessary to increase the speed of the Ethernet connection as a result of the determination, the control unit may control the image forming apparatus to receive and output the printing data after increasing the speed of the Ethernet connection and turning on the print engine.

The controller may include a power-save mode management unit to identify a power-save mode condition stored in the storage unit and determining a necessity of increasing the speed of the Ethernet connection based on the printing data, and an Ethernet control unit to adjust the speed of the Ethernet connection by controlling the Ethernet interface unit based on a result of the determining by the power-save mode management unit.

The power-save mode management unit may identify an amount of the printing data and, when the identified amount of the printing data is equal to or smaller than a pre-defined data amount, may determine that it is not necessary to increase the speed of the Ethernet connection.

The power-save mode management unit may identify an output page count of the printing data and, when the identified output page count is equal to or smaller than a pre-defined page count, may determine that it is not necessary to increase the speed of the Ethernet connection.

The power-save mode management unit may receive printing work information from the external device, and based on the received printing work information, may determine a necessity of increasing the speed of the Ethernet connection.

The power-save mode management unit may identify an amount and an output page count of the printing data from the printing work information, and may determine a necessity of increasing the speed of the Ethernet connection by comparing the identified amount and output page count of the printing data to the identified power-save mode condition.

When the identified amount of the printing data is equal to or smaller than a pre-defined data amount or when the identified output page count of the printing data is equal to or smaller than a pre-defined page count, the power-save mode management unit may determine that it is not necessary to increase the speed of the Ethernet connection.

The power-save mode management unit may identify a type of the printing data from the received printing work information, and, when the identified type of the printing data is not a type of printing data that needs to be output immediately after being received, may determine that it is not necessary to increase the speed of the Ethernet connection.

While the printing data is received, the power-save mode management unit may determine a necessity of increasing the speed of the Ethernet connection based on the received printing data.

The foregoing and/or other features and utilities of the present general inventive concept may also be achieved by providing an image forming apparatus to receive printing data from an external device, including an Ethernet interface unit to connect the image forming apparatus to the external device at a first connection speed corresponding to a power-save mode, a control unit to determine whether to maintain the first connection speed or to apply a second connection speed that is faster than the first connection speed to the Ethernet interface unit based on a determination that at least one predetermined power-save mode condition corresponding to the printing data is exceeded, and a print engine to be turned off during the power save mode and to receive and output the printing data when turned on based on a command from the control unit.

The control unit may turn on the print engine to receive the printing data after the determination.

The image forming apparatus may further include a user interface unit to allow a user to input the predetermined power-save mode condition.

The at least one predetermined power-save mode condition corresponding to the printing data may include at least one of a bit-size of the printing data, a number of pages to be output by the printing data, and a type of the printing data.

The control unit may determine that the first connection speed is to be maintained when the bit-size of the printing data is equal to or smaller than a predetermined bit-size.

The control unit may determine that the first connection speed is to be maintained when the number of pages to be output by the printing data is equal to or smaller than a predetermined page count.

The control unit may determine that the first connection speed is to be maintained when the type of the printing data is not a type of printing data that needs to be output immediately after being received.

### BRIEF DESCRIPTION OF THE DRAWINGS

For a better understanding of the invention, and to show how embodiments of the same may be carried into effect, reference will now be made, by way of example, to the accompanying diagrammatic Figures in which:
FIG. 1 is a diagram illustrating an image forming apparatus according an exemplary embodiment of the present general inventive concept;
FIG. 2 is a diagram illustrating a screen of a user interface to set a condition of a power-save mode according an exemplary embodiment of the present general inventive concept; and
FIGS. 3 through 9 are flowcharts illustrating a method of controlling a speed of an Ethernet connection in a power-save mode according to exemplary embodiments of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

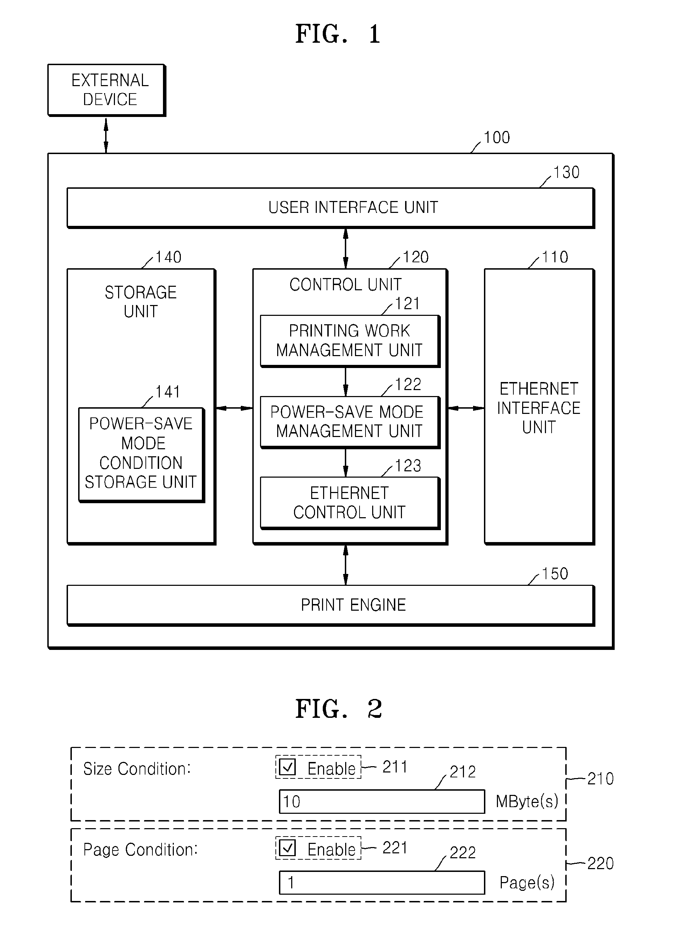

FIG. 1 is a diagram illustrating an image forming apparatus 100 according an exemplary embodiment of the present general inventive concept. Before describing detailed operations of each unit included in the image forming apparatus 100 of FIG.1, a power-save mode of the image forming apparatus 100, according to an exemplary embodiment of the present general inventive concept, is described. When certain conditions are met, that is, when the image forming apparatus 100, according to an exemplary embodiment of the present general inventive concept, does not perform any operation for a certain period of time or when there is a request from a user to the image forming apparatus 100 to enter a power-save mode, the image forming apparatus 100 may switch to the power-save mode so as to reduce a standby power consumption.

When switching from a normal mode (hereinafter referred to as a P0 state) to the power-save mode, the image forming apparatus 100 shuts off power supplied to a print engine and a scanner as a first phase (hereinafter referred to as a P0-Off state). That is, in the P0-Off state, the power supplied to a print engine 150 is shut off, and the print engine 150 is turned off. If an operation is not performed within a certain period of time even after switching to the P0-Off state, the image forming apparatus 100 reduces a clock of a main board and an Ethernet PHY chip of the image forming apparatus 100, thus reducing a speed of an Ethernet connection as a second phase (hereinafter referred to as a P1 state). In an example, according to an exemplary embodiment of the present general inventive concept, a speed of an Ethernet connection in the P0 and P0-Off states is 1 Gbps, and a speed of the Ethernet connection in the P1 state is 10 Mbps. If a certain period of time elapses without an operation being performed while in the P1 state, the image forming apparatus 100 shuts off power supplied to the main board as a third phase (hereinafter referred to as a P2 state). A micro-kernel, instead of the main board, operates in the P2 state, and thus types of supportable network protocols are limited. Accordingly, if while in the P2 state, transmission of a packet via a network protocol, which is not supported in the P2 state, is detected, the image forming apparatus 100 switches back to the P1 state and receives the packet.

In order to turn on the print engine 150 to output printing data in the P1 or P2 state, the image forming apparatus 100 has only to turn the power supply back on. Therefore, a time delay is not usually generated. However, in order to increase a speed of an Ethernet connection while in the P1 or P2 state, the image forming apparatus 100 must first disconnect a 10 Mbps Ethernet connection and then newly establish a 1 Gbps Ethernet connection. Therefore, a time delay of about 3 to 4 seconds results.

Accordingly, an important factor that influences printing work time is a change in a speed of the Ethernet connection. In comparison with the time required by the image forming apparatus 100 to receive data based on a low speed of the Ethernet connection, it may take a longer time if the image forming apparatus 100 receives data after increasing the speed of the Ethernet connection for all data received through the Ethernet connection. This is because of the resulting time delay involved in order to change the speed of the Ethernet connection.

The image forming apparatus 100, according to an exemplary embodiment of the present general inventive concept, controls the speed of the Ethernet connection in the power-save mode in order to reduce a printing work time required to receive and output the printing data. Specifically, when the image forming apparatus 100, while in the P1 or P2 state, detects transmission of the printing data from outside via the Ethernet connection, it does not always switch to the P0-off state and increase the speed of the Ethernet connection to receive the printing data. Rather, the image forming apparatus 100 first determines if it is necessary to increase the speed of the Ethernet connection based on the printing data. As a result, if it is determined that it is not necessary to increase the speed of the Ethernet connection, the image forming apparatus 100 receives the printing data at a speed of 10 Mbps without changing the speed of the Ethernet connection. If it is determined that it is necessary to increase the speed of the Ethernet connection, the image forming apparatus 100 changes the speed of the Ethernet connection to 1 Gbps and then receives the printing data.

The necessity of increasing the speed of the Ethernet connection may be determined based on an amount or an output page count of the printing data. A processing time required to perform a printing operation may be minimized by adjusting a condition of the amount or output page count of the printing data to increase the speed of the Ethernet connection.

A detailed operation of the image forming apparatus 100, according to an exemplary embodiment of the present general inventive concept, is described by referring to FIG. 1. Referring to FIG. 1, the image forming apparatus 100 according to an exemplary embodiment of the present general inventive concept may include an Ethernet interface unit 110, a control unit 120, a user interface unit 130, a storage unit 140, and the print engine 150. The control unit 120 may include a printing work management unit 121, a power-save mode management unit 122, and an Ethernet control unit 123. The storage unit 140 may include a power-save mode condition storage unit 141.

The image forming apparatus 100 may be connected to an external device 300, such as a host computer, via the Ethernet interface unit 110. The image forming apparatus 100 may receive printing data from the external device 300 via the Ethernet interface unit 110.

When the image forming apparatus 100 enters into a power-save mode, the power-save mode management unit 122 shuts off a power supplied to the print engine 150 to turn off the print engine 150. When the image forming apparatus 100, while in the P1 or P2 state, detects transmission of printing data from an external device 300 via the Ethernet, the power-save mode management unit 122 determines a necessity of increasing the speed of the Ethernet connection from 10 Mbps to 1 Gbps to receive the printing data, based on the printing data. The Ethernet control unit 123 controls the Ethernet interface unit 110 to adjust the speed of the Ethernet connection according to an output from the power-save mode management unit 122.

As a result of determination made by the power-save mode management unit 122, if it is determined that it is necessary to increase the speed of the Ethernet connection, the Ethernet control unit 123 increases the speed of the Ethernet connection by controlling the Ethernet interface unit 110. Then, the power-save mode management unit 122 turns the print engine 150 on by turning the power supply to the print engine 150 back on, and receives and outputs the printing data. In contrast, as a result of determination made by the power-save mode management unit 122, if it is determined that it is not necessary to increase the speed of the Ethernet connection, the Ethernet control unit 123 does not increase the speed of the Ethernet connection. Then, the power-save mode management unit 122 turns the print engine 150 on by turning the power supply to the print engine 150 back on, and then receives and outputs the printing data.

The power-save mode management unit 122 determines the necessity of increasing the speed of the Ethernet connection based on the printing data by using a following method.

In order for the power-save mode management unit 122 to determine the necessity of increasing the speed of the Ethernet connection, a power-save mode condition, which defines a condition of the printing data when the speed of the Ethernet connection needs to be increased, needs to be defined in advance. The power-save mode condition may be input by a user via the user interface unit 130, such as an operation panel of the image forming apparatus, and then, stored in a power-save mode condition storage unit 141 included in the storage unit 140. Otherwise, the power-save mode condition may be stored in the power-save mode condition storage unit 141 by a manufacturer when the image forming apparatus 100 is released.

According to an exemplary embodiment of the present general inventive concept, the power-save mode condition includes an amount or an output page count of the printing data is defined. Referring to FIG. 2, the defining of the power-save mode condition is described in detail. FIG. 2 is a diagram illustrating a screen of a user interface to define the power-save mode condition, according to an exemplary embodiment of the present general inventive concept. FIG. 2 is divided into a portion 210 to define the data amount of the printing data and a portion 220 to define the output page count of the printing data. The portion 210 to define the amount of the printing data includes a check box 211 to set the amount of the printing data as the power-save mode condition and a data amount input box 212 to input a specific amount of printing data in megabytes. Likewise, the portion 220 to define the output page count of the printing data includes a check box 221 to set the output page count of printing data as the power-save mode condition and an output page count input box 222 to input the specific output page count.

Referring to FIG. 2, the check box 211 to set the amount of the printing data as the power-save mode condition and the check box 221 to set the output page count of the printing data as the power-save mode condition are all checked. 10 Mbytes are entered in the data amount input box 212, and 1 Page is entered in the output page count input box 222. The speed of the Ethernet connection will thus increase only when the printing data amount exceeds 10 Mbytes and an output page count exceeds 1 page. If a data amount of printing data exceeds 10 Mbytes but an output page count is 1 page or less, or if an output page count of printing data exceeds 1 page but a data amount is 10 Mbytes or less, the power-save mode management unit 122 receives the printing data at the speed of the Ethernet connection in the P1 or P2 state and outputs the printing data without changing the speed of the Ethernet connection.

As such, the amount of printing data and the output page count of the printing data may be defined by a user as the power-save mode condition, according to user situations. It is also possible to use both the amount and the output page count of the printing data or either of them as the power-save mode condition.

Referring back to FIG. 1, when detecting transmission of the printing data from the external device 300 via the Ethernet interface 110, the power-save mode management unit 122 identifies the power-save mode condition stored in the power-save mode condition storage unit 141, identifies an amount and an output page count of the printing data, and thus, determines a necessity of increasing the speed of the Ethernet connection.

The power-save mode management unit 122 may detect the transmission of the printing data from the external device 300 via the Ethernet interface 110 by receiving printing work information including details of the amount and the output page count of the printing data. Then, the power-save mode management unit 122 identifies the amount and the output page count of the printing data to be received, based on the printing work information, and compares the amount and the output page count of the printing data to the power-save mode condition identified at the power-save mode storage unit 141. Thus, the power-save mode management unit 122 determines the necessity of increasing the speed of the Ethernet connection. As a result of the determination, if it is not necessary to increase the speed of the Ethernet connection, the power-save mode management unit 122 receives and outputs the printing data after turning the print engine 150 on, without transmitting a command to change the speed of the Ethernet connection to the Ethernet control unit 123.

For example, as illustrated in FIG. 2, the power-save mode condition is defined, and if an amount of the printing data to be received exceeds 10 Mbytes and an output page count exceeds 1 page, the power-save mode management unit 122 increases the speed of the Ethernet connection to 1 Gbps and then receives and outputs the printing data.

Unlike the above-described exemplary embodiment of the present general inventive concept, even when an amount of the printing data, which is identified from the received printing work information by the power-save mode management unit 122, exceeds a data amount defined in the power-save mode condition, the power-save mode management unit 122 may begin to receive and output printing data. Then, when an output page count of a print job which is currently being printed exceeds a page count defined in the power-save mode condition, the power-save mode management unit 112 may temporarily stop receiving the printing data, increase the speed of the Ethernet connection, and then resume the receiving and printing of the printing data. In this case, the printing work management unit 121 counts the pages that have already been printed and transmits the printed page count to the power-save mode management unit 112. Then, the power-save mode management unit 122 determines whether to increase the speed of the Ethernet connection, based on the transmitted page count.

For example, as illustrated in FIG. 2, when the power-save mode condition is defined, if the amount of the printing data to be received exceeds 10 Mbytes and if the output page count exceeds 1 page, the power-save mode management unit 122 begins to receive and output printing data. Once the output of the first page of the printing data has been completed, the power-save mode management unit 122 temporarily stops receiving the printing data, increases the speed of the Ethernet connection to 1 Gbps, and then resumes the receiving and outputting of the printing data.

If only a data amount of the printing data is defined to be used as the power-save mode condition, the power-save mode management unit 122 determines an increase in the Ethernet connection speed based only on the identified data amount of the printing data, without considering an output page count. In contrast, if only an output page count of the printing data is defined to be used as the power-save mode condition, the power-save mode management unit 122 determines an increase in the Ethernet connection speed based only on the output page count of the printing data, without considering the data amount of the printing data.

The power-save mode management unit 122 may determine a necessity of increasing the speed of the Ethernet connection based on a type of the printing data, regardless of the data amount or the output page count of the printing data. Printing work information, which is received before printing data is received, may include details of the type of the printing data. If the printing data, identified from the printing work information, is a type of printing data to perform secured printing or stored printing that does not need to be output immediately after being received, the power-save mode management unit 122 may determine that an increase in the speed of the Ethernet connection is not necessary.

In conclusion, if the image forming apparatus 100 enters to the power-save mode, the print engine 150 is turned off. If the printing data meets a certain power-save mode condition when detecting transmission of the printing data from the external device 300 while the speed of the Ethernet connection is reduced, the image forming apparatus may turn on the print engine 150 and receive and output the printing data without changing the speed of the Ethernet connection. Thus, printing work time may be reduced.

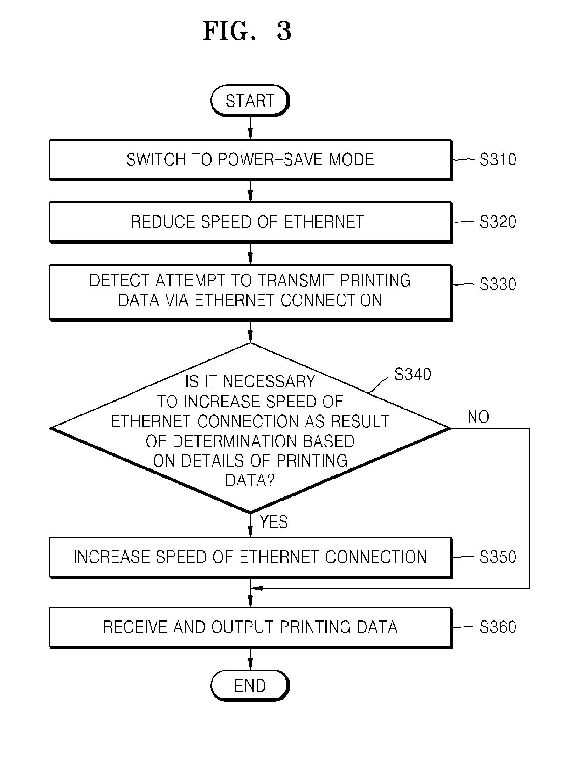

FIGS. 3 through 9 are flowcharts illustrating a method of controlling a speed of the Ethernet connection in a power-save mode according to exemplary embodiments of the present general inventive concept. Hereinafter, the method of controlling the speed of the Ethernet connection in a power-save mode according to exemplary embodiments of the present general inventive concept is described in detail, by referring to the flowcharts of FIGS. 3 through 9.

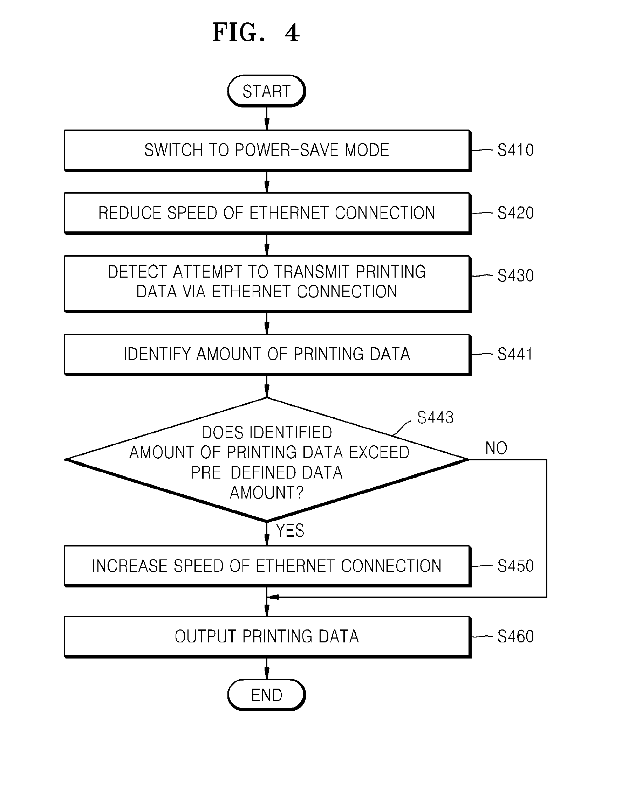

Referring to FIG. 3, in operation S310, an image forming apparatus 100 enters a power-save mode. The image forming apparatus 100 turns off a print engine 150 by shutting off a power supplied to the print engine 150. If a certain period of time elapses without any operation occurring after switching to the power-save mode, the image forming apparatus 100 proceeds to operation S320 to reduce a speed of an Ethernet connection made between the image forming apparatus 100 and an external device 300 such as a host computer. When the print engine 150 is turned off and the speed of the Ethernet connection is reduced, if an attempt to transmit printing data via the Ethernet connection is detected in operation S330, the image forming apparatus 100 proceeds to S340 so as to determine whether it is necessary to increase the speed of the Ethernet connection. The determination in the operation S340 is performed based on the printing data to be received. Specifically, a requirement condition of the printing data to perform the determination is described in FIGS. 4 through 9.

As a result of the determination in the operation S340, if it is necessary to increase the speed of the Ethernet connection, the image forming apparatus 100 proceeds to operation S350 to increase the speed of the Ethernet connection. Then, the image forming apparatus 100 proceeds to operation S360 in order to turn the print engine 150 back on and to receive and output the printing data.

In contrast, as a result of the determination in the operation S340, if it is unnecessary to increase the speed of the Ethernet connection, the image forming apparatus 100 directly proceeds to operation S360 to turn the print engine 150 back on, without increasing the speed of the Ethernet connection, and then receives and outputs the printing data.

As such, with regard to printing data in correspondence with a certain requirement condition, the image forming apparatus 100 may turn on the print engine 150 and may receive and output the printing data, without having to increase the speed of the Ethernet connection. Accordingly, a time delay, which is caused by a change in the speed of the Ethernet connection, may be prevented, and thus, printing work time may be reduced.

Hereinafter, the method of controlling the speed of the Ethernet connection in the power-save mode according to the flowchart of FIG. 4 is described in detail. Operations S410 through S430 of FIG. 4 are identical to the operations S310 through S330 of FIG. 3, and operations S450 and S460 of FIG. 4 are identical to the operations S350 and S360 of FIG. 3. Thus, a detailed description thereof is not provided here.

Referring to FIG. 4, the method of controlling the speed of the Ethernet connection in the power-save mode according to the flowchart of FIG. 4 includes operations S441 and S443 which specify the operation S340 of FIG. 3. That is, a detailed method of determining an increase in the speed of the Ethernet connection based on the printing data is described. In operation S441, the image forming apparatus 100 identifies a data amount of the printing data to be received, and then, in operation S443, determines whether the identified data amount of the printing data exceeds a pre-defined data amount. As a result of the determination, if the identified data amount of the printing data exceeds the pre-defined data amount, the image forming apparatus 100 determines that it is necessary to increase the speed of the Ethernet connection, and proceeds to operation S450. If the identified data amount of the printing data is equal to or smaller than the pre-defined data amount, the image forming apparatus 100 determines that it is not necessary to increase the speed of the Ethernet connection, and directly proceeds to operation S460.

As such, with regard to a data amount of the printing data which is equal to or less than a certain amount, the image forming apparatus 100 may turn on the print engine 150 and receive and output the printing data without having to change the speed of the Ethernet connection. Accordingly, printing work time may be reduced.

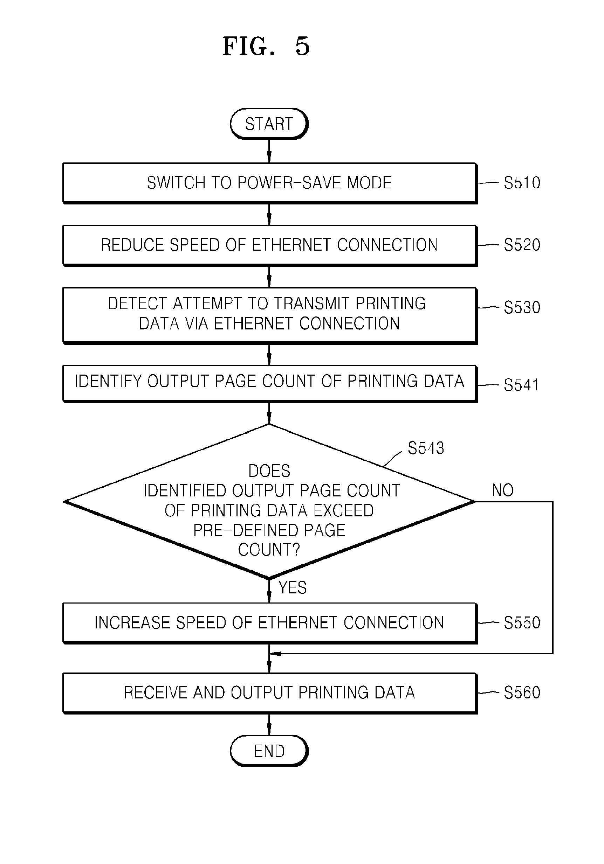

Next, the method of controlling the speed of the Ethernet connection in the power-save mode according to the flowchart of FIG. 5 is described. Operations S510 through S530 of FIG. 5 are identical to the operations S310 through S330 of FIG. 3, and operations S550 and S560 of FIG. 5 are identical to the operations S350 and S360 of FIG. 3. Thus, a detailed description thereof is not provided here.

Referring to FIG. 5, the method of controlling the speed of the Ethernet connection in the power-save mode according to the flowchart of FIG. 5 includes operations S541 and S543 which specify the operation S340 of FIG. 3. That is, a detailed method of determining an increase in the Ethernet connection speed based on the printing data is described. In operation S541, the image forming apparatus 100 identifies an output page count of the printing data to be received, and then, in operation S543, determines whether the identified output page count of printing data to be received exceeds a pre-defined page count. As a result of the determination, if the identified output page count of the printing data to be received exceeds the pre-defined output page count of the printing data, the image forming apparatus 100 determines that it is necessary to increase the speed of the Ethernet connection, and proceeds to operation S550. If the identified output page count of the printing data to be received is equal to or smaller than the pre-defined page count, the image forming apparatus 100 determines that it is not necessary to increase the speed of the Ethernet connection and then proceeds directly to operation S560.

As such, with regard to printing data which is equal to or less than a certain page count, the image forming apparatus 100 may turn on only the print engine 150 and then receive and output of the printing data, without having to change the speed of the Ethernet connection. Accordingly, printing work time may be reduced.

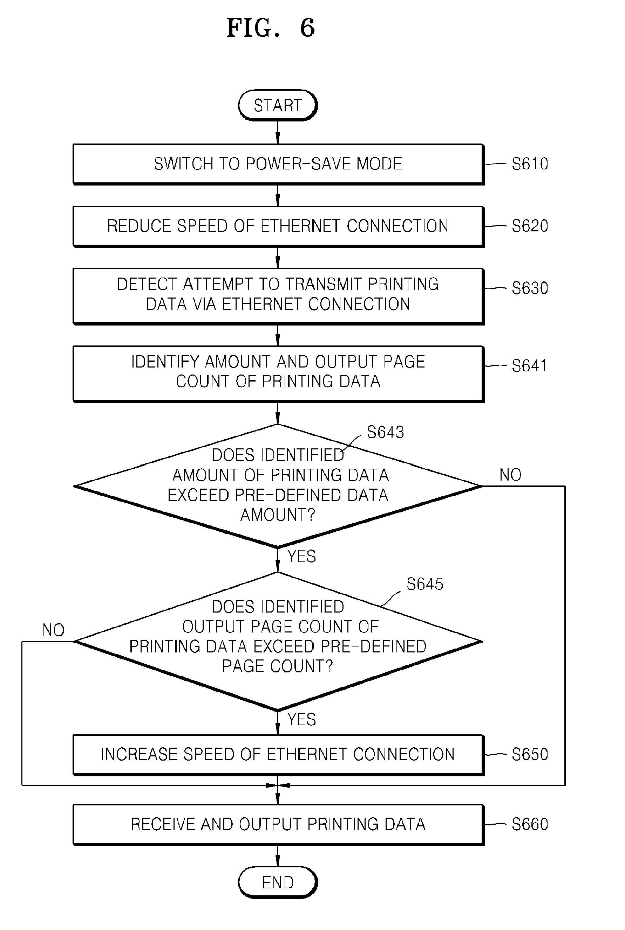

The method of controlling the speed of the Ethernet connection in the power-save mode according to the flowchart of FIG. 6 is now described. Operations S610 through S630 of FIG. 6 are identical to the operations S310 through S330 of FIG. 3, and operations S650 and S660 of FIG. 6 are identical to the operations S350 and S360 of FIG. 3. Thus, a detailed description thereof is not provided here.

Referring to FIG. 6, the method of controlling the speed of the Ethernet connection in the power-save mode according to the flowchart of FIG. 6 includes operations S641, S643, and S645 which specify the operation S340 of FIG. 3. That is, a detailed method of determining an increase in the speed of the Ethernet connection based on the printing data is described. In operation S641, the image forming apparatus 100 identifies a data amount and an output page count of the printing data to be received, and then, determines whether the identified amount of the printing data to be received exceeds the pre-defined data amount in operation S643. As a result of the determination, if the identified amount of the printing data to be received exceeds the pre-defined data amount, the image forming apparatus 100 proceeds to operation S645. If the identified amount of the printing data is equal to or smaller than the pre-defined data amount, the image forming apparatus 100 determines that it is not necessary to increase the speed of the Ethernet connection, and proceeds to operation S660.

In operation S645, the image forming apparatus 100 determines whether the identified output page count of the printing data to be received exceeds the pre-defined page count. As a result of the determination, if the identified output page count of the printing data to be received exceeds the pre-defined page count, the image forming apparatus 100 determines that it is necessary to increase the speed of the Ethernet connection and proceeds to operation S650. If the identified output page count of the printing data is equal to or smaller than the pre-defined page count, the image forming apparatus 100 determines that it is not necessary to increase the speed of the Ethernet connection and directly proceeds to operation S660.

As such, if a data amount of the printing data to be received is equal to or less than a pre-defined data amount, or if an output page count of the printing data is equal to or less than a pre-defined page count, the image forming apparatus 100 may turn on only the print engine 150 and then receive and output the printing data, without having to change the speed of the Ethernet connection. Accordingly, printing work time may be reduced.

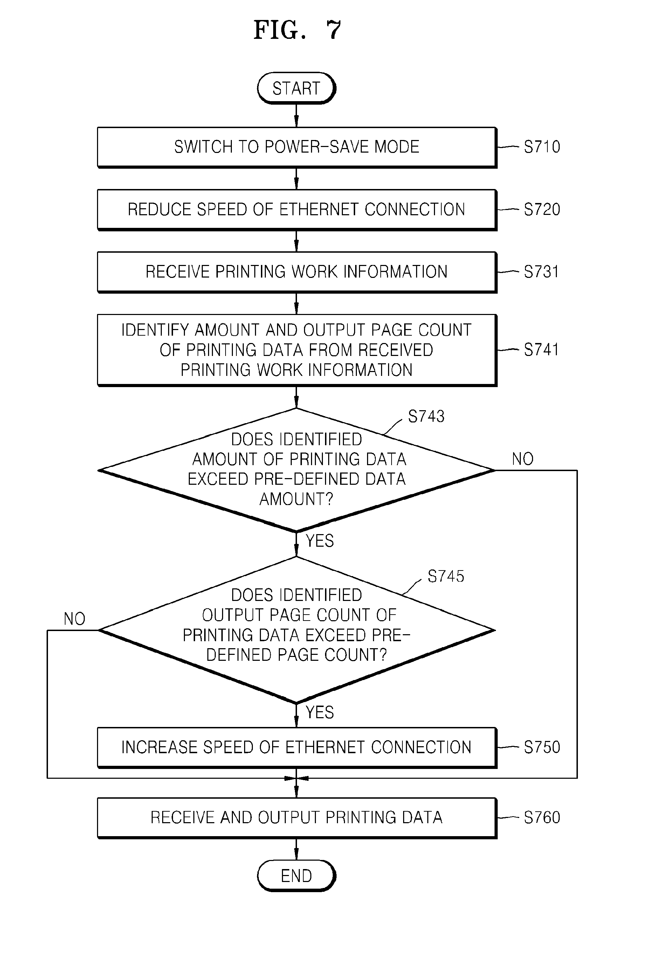

The method of controlling the speed of the Ethernet connection in the power-save mode according to the flowchart of FIG. 7 is now described. Operations S710 and S720 of FIG. 7 are identical to the operations S310 and S320 of FIG. 3, and operations S750 and S760 of FIG. 7 are identical to the operations S350 and S360 of FIG. 3. Thus, a detailed description thereof is not provided here. Additionally, as operations S743 and S745 of FIG. 7 are identical to the operations S643 and S645 of FIG. 6, a detailed description thereof is not provided here.

Referring to FIG. 7, the method of controlling the Ethernet connection speed in the power-save mode according to the flowchart of FIG. 7 includes operation S731 which specifies the operation S330 of FIG. 3. That is, in operation S731, upon receiving printing work information that includes a data amount of the printing data and an output page count, the image forming apparatus 100 detects an attempt to transmit the printing data via the Ethernet connection. After receiving the printing work information, in operation S741, the image forming apparatus 100 identifies a data amount and an output page count of the printing data from the received printing work information. Then, the image forming apparatus 100 proceeds to operation S743.

As such, before beginning to receive the printing data, the image forming apparatus 100 receives the printing work information. Then, the image forming apparatus 100 determines an increase in the speed of the Ethernet connection, based on details of the printing data that it identifies from the received printing work information. Thus, printing work time may be reduced.

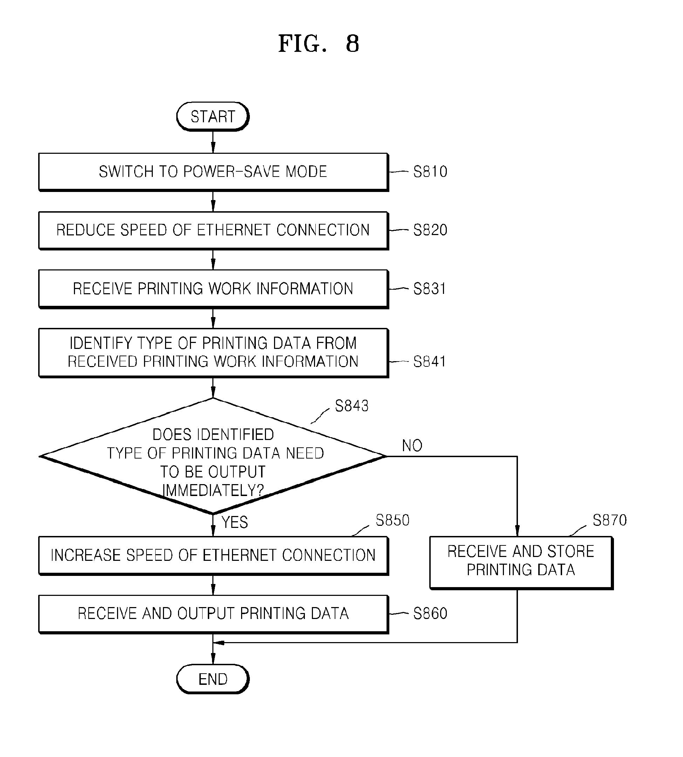

Next, the method of controlling the speed of the Ethernet connection in the power-save mode according to the flowchart of FIG. 8 is described. Operations 810 and S820 of FIG. 8 are identical to the operations S310 and S320 of FIG. 3, and operations S850 and S860 of FIG. 8 are identical to the operations S350 and S360 of FIG. 3. Thus, a detailed description thereof is not provided here. Additionally, as operation S831 of FIG. 8 is identical to the operation S731 of FIG. 7, a detailed description thereof is not provided here.

Referring to FIG. 8, in operation S841, the image forming apparatus 100 identifies a type of printing data from the received printing work information. As a result of the identification, if the printing data is a type of printing data that needs to be output immediately after being received, the image forming apparatus 100 proceeds to operation S850. But, if the printing data is not the type of printing data that needs to be output immediately after being received, the image forming apparatus 100 determines that an increase in the speed of the Ethernet connection is not necessary and proceeds to S870. A type of printing data to perform secured printing or stored printing does not need to be output immediately.

As such, the image forming apparatus 100 will increase the speed of the Ethernet connection only when the printing data needs to be output immediately after being received. If the printing data does not need to be output immediately after being received, the image forming apparatus 100 may turn on a print engine 150 and receive and output the printing data, without having to change the speed of the Ethernet connection. Thus, printing work time may be reduced.

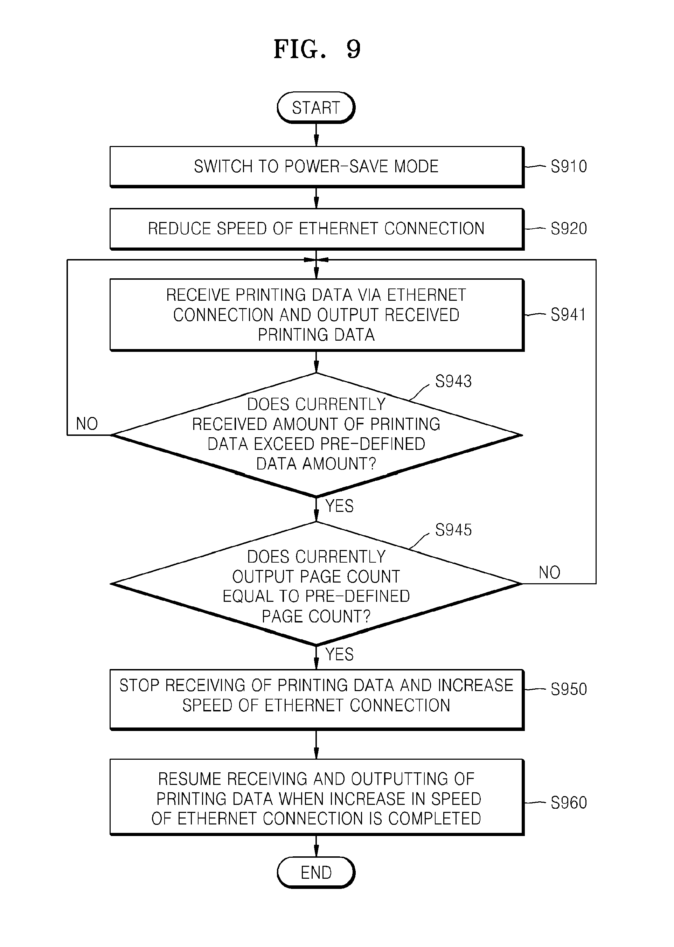

The method of controlling the speed of the Ethernet connection in the power-save mode according to the flowchart of FIG. 9 is now described. Operations S910 and S920 of FIG. 9 are identical to the operations S310 and S320 of FIG. 3. Thus, a detailed description thereof is not provided here.

Referring to FIG. 9, if printing data is transmitted from an external device 300, the image forming apparatus 100 turns on only a print engine 150 and receives and outputs the printing data, without having to change the speed of the Ethernet connection. While receiving and outputting the printing data, the image forming apparatus 100 determines whether it is necessary to increase the speed of the Ethernet connection.

Specifically, in operation S941, the image forming apparatus 100 receives the printing data at a reduced speed of the Ethernet connection, turns on the print engine 150, and then, outputs the received printing data. In operation S943, the image forming apparatus 100 determines whether a received amount of the printing data exceeds the pre-defined data amount. If the received amount of the printing data is equal to or smaller than the pre-defined data amount, the image forming apparatus 100 goes back to S941. If the received amount of the printing data exceeds the pre-defined data amount, the image forming apparatus 100 proceeds to S945. In operation S945, if an output page count exceeds a pre-defined page count, the image forming apparatus 100 proceeds to S950. If the output page count is equal to or smaller than the pre-defined page count, the image forming apparatus 100 goes back to S941.

As a result of the determination in operation S945, if the output page count equals to the pre-defined page count, the image forming apparatus 100 stops receiving the printing data and increases the speed of the Ethernet connection in operation S950. Then, in operation S960, when the increase in the speed of the Ethernet connection has been completed, the image forming apparatus 100 resumes the receiving and outputting of the printing data from the point in the printing data where the receiving stopped.

As such, while receiving and printing the printing data, the image forming apparatus 100 determines whether an increase in the speed of the Ethernet connection is necessary. Thus, printing work time may be reduced without receiving the printing data information.

As described above, if the image forming apparatus 100 switches to the power-save mode, a print engine 150 is turned off. If, while in the power-save mode, the printing data meets a certain requirement condition when detecting transmission of the printing data from the external device 300 while a speed of the Ethernet connection is at a reduced level, the image forming apparatus 100 may turn on the print engine 150 and receive and output the printing data without having to change the speed of the Ethernet connection. Thus, printing work time may be reduced.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling a speed of an Ethernet connection in a power-save mode of an image forming apparatus, the method comprising:
turning off a print engine when the image forming apparatus enters the power save mode (S310);
reducing the speed of the Ethernet connection between the image forming apparatus and an external device (S320);
detecting an attempt to transmit printing data via the Ethernet connection from the external device (S330);
determining a necessity of increasing the speed of the Ethernet connection based on the printing data, in order to receive the printing data when the attempt is detected (S340); and
receiving and outputting the printing data (S360), wherein the receiving and outputting the printing data comprises, when it is not necessary to increase the speed of the Ethernet connection as a result of the determining, receiving and outputting the printing data after turning on the print engine, without changing the speed of the Ethernet connection.

2. The method of claim 1, wherein the receiving and outputting the printing data comprises, when it is necessary to increase the speed of the Ethernet connection as a result of the determining, receiving and outputting the printing data after increasing the speed of the Ethernet connection and turning on the print engine.

3. The method of claim 1, wherein the determining comprises:
identifying an amount of the printing data;
determining when the identified amount of the printing data exceeds a pre-defined data amount; and
when the identified amount of the printing data is equal to or smaller than the pre-defined data amount, determining that it is not necessary to increase the speed of the Ethernet connection.

4. The method of claim 1, wherein the determining comprises:
identifying an output page count of the printing data;
determining when the identified output page count of the printing data exceeds a pre-defined page count; and
when the identified output page count of the printing data is equal to or smaller than pre-defined page count, determining that it is not necessary to increase the speed of the Ethernet connection.

5. The method of claim 1, wherein the detecting is performed by receiving printing work information from the external device via the Ethernet connection, and
wherein the determining is performed by determining the necessity of increasing the speed of the Ethernet connection based on the received printing work information

6. The method of claim 5, wherein the determining comprises:
identifying a type of the printing data from the received printing work information; and
when the identified type of the printing data is not a type of printing data which needs to be output immediately after being received, determining that it is not necessary to increase the speed of the Ethernet connection.

7. A non-transitory computer-readable storage medium having stored thereon a computer program, which when executed by a computer, performs the method according to any of claims 1 through 6.

8. An image forming apparatus (100) comprising:
a user interface unit (130) to input a power-save mode condition;
a storage unit (140) to store the input power-save mode condition;
an Ethernet interface unit (110) to receive printing data from an external device via an Ethernet connection;
a print engine (150) to output the received printing data; and
a control unit (120) to turn off the print engine and reduce speed of the Ethernet connection when the image forming apparatus enters to the power-save mode,
wherein, when the image forming apparatus enters to the power-save mode and detects an attempt to transmit printing data via the Ethernet interface unit from the external device, the control unit determines a necessity of increasing the speed of the Ethernet connection based on the printing data,
wherein, when it is not necessary to increase the speed of the Ethernet connection as a result of the determination, the control unit controls the image forming apparatus to receive and output the printing data after turning on the print engine, without changing the speed of the Ethernet connection.

9. The image forming apparatus of claim 8, wherein, when it is necessary to increase the speed of the Ethernet connection as a result of the determination, the control unit controls the image forming apparatus to receive and output the printing data after increasing the speed of the Ethernet connection and turning on the print engine.

10. The image forming apparatus of claim 8, wherein the controller comprises:
a power-save mode management unit to identify a power-save mode condition stored in the storage unit and determining a necessity of increasing the speed of the Ethernet connection based on the printing data; and
an Ethernet control unit to adjust the speed of the Ethernet connection by controlling the Ethernet interface unit based on a result of the determining by the power-save mode management unit.

11. The image forming apparatus of claim 10, wherein the power-save mode management unit identifies an amount of the printing data and, when the identified amount of the printing data is equal to or smaller than a pre-defined data amount, determining that it is not necessary to increase the speed of the Ethernet connection.

12. The image forming apparatus of claim 10, wherein the power-save mode management unit identifies an output page count of the printing data and, when the identified output page count is equal to or smaller than a pre-defined page count, determining that it is not necessary to increase the speed of the Ethernet connection.

13. The image forming apparatus of claim 10, wherein the power-save mode management unit receives printing work information from the external device, and based on the received printing work information, determines a necessity of increasing the speed of the Ethernet connection.

14. The image forming apparatus of claim 13, wherein the power-save mode management unit identifies an amount and an output page count of the printing data from the printing work information, and determines a necessity of increasing the speed of the Ethernet connection by comparing the identified amount and output page count of the printing data to the identified power-save mode condition.

15. The image forming apparatus of claim 13, wherein the power-save mode management unit identifies a type of the printing data from the received printing work information, and, when the identified type of the printing data is not a type of printing data that needs to be output immediately after being received, determines that it is not necessary to increase the speed of the Ethernet connection.
